Europäisches Patentamt

European Patent Office

Office européen des brevets

(19)

(11) Veröffentlichungsnummer: **0 168 377 B1**

## (12) EUROPÄISCHE PATENTSCHRIFT

(45) Veröffentlichungstag der Patentschrift: 27.03.91

(51) Int. Cl.⁵: **H01M 10/36, H01M 2/40**

(21) Anmeldenummer: 85890126.7

(22) Anmeldetag: 05.06.85

(54) Galvanisches Element.

(30) Priorität: 15.06.84 AT 1955/84

(43) Veröffentlichungstag der Anmeldung:
15.01.86 Patentblatt 86/03

(45) Bekanntmachung des Hinweises auf die
Patenterteilung:
27.03.91 Patentblatt 91/13

(84) Benannte Vertragsstaaten:
AT BE CH DE FR GB IT LI LU NL SE

(56) Entgegenhaltungen:
EP-A- 149 448          EP-A- 0 091 520
GB-A- 2 070 321        US-A- 3 758 342
US-A- 3 772 561        US-A- 3 788 899

(73) Patentinhaber: **S.E.A. Studiengesellschaft für Energiespeicher und Antriebssysteme Gesellschaft m.b.H.**
**Bleckmanngasse 10 Postfach 49**
**A-8680 Mürzzuschlag(AT)**

(72) Erfinder: **Tomazic, Gerd, Dr.**
**Hofkirchergasse 4**
**A-8680 Mürzzuschlag(AT)**

## Beschreibung

Die Erfindung bezieht sich auf ein Sekundärelement, insbesondere wiederaufladbares Zink/Brom Element.

In der EP-A-0091520 wird ein Sekundärelement mit einer Zelle beschrieben, die eine Anode und eine Kathode aufweist, wobei der Anodenraum von dem Kathodenraum durch ein Diaphragma abgetrennt ist. Es sind zwei Vorratsbehälter jeweils für den Katholyten bzw. Anolyten vorgesehen, und die Zirkulation der Elektrolyten wird durch Pumpen aufrecht erhalten. In der Leitung zum bzw. vom Elektrolytraum ist jeweils ein Absperrorgan vorgesehen. Im Bromkreislauf des Zink/Brom-Elementes ist im Elektrolytbehälter die Möglichkeit vorgesehen, daß die wässrige Phase des Elektrolyten einen Stoffausgleich mit einer öligen Phase, die durch Brom und einen Komplexbildner gebildet ist, durchgeführt wird. Durch die geringere Konzentration des Broms in der wässrigen Phase wird eine Selbstentladung wesentlich verringert.

Die US-A-3,758.342 hat eine Brennstoffzelle zum Gegenstand, wobei die einzelnen Zellen abwechselnd mit dem Elektrolytbehälter über eine Sammelleitung und Einzelventilen verbunden sind. In diesem Elektrolytbehälter soll jeweils das in der Zelle zur Oxydation gelangende Metall und zwar Zink, falls eine zu geringe metallische Konzentration vorliegt, zugemischt werden. Die einzelnen Oxydationsräume der Brennstoffzelle werden wie bei einem Verbrennungsmotor alternierend geöffnet und geschlossen, wobei bei geschlossenen Ventilen die Verbrennung stattfindet.

Die US-A-3,788.899 hat ebenfalls eine Brennstoffzelle zum Gegenstand, wobei Anoden und Kathoden vorgesehen sind und der Elektrolyt über eine Sammelleitung und sodann Ventilen und Einzelleitungen den Elektrolyträumen zugeführt wird.

In der US-A-3,773.561 wird ein Element beschrieben, bei dem die elektrische Verbindung der einzelnen Zellen während einer Stillstandsperiode und auch der Fluß des Elektrolyten während einer derartigen Periode durch Verschließen der Zu- und Abflußleitungen für den Elektrolyten vermieden werden soll. Der Raum zwischen zwei bipolaren Elektroden ist nicht durch ein Diaphragma getrennt, und es liegt ein gemeinsamer Reaktionsraum vor. Bei beendeter Stromentnahme verbleibt der Elektrolyt, welcher molekulares Chlor gelöst enthält, im Reaktionsraum, welches den Zinkfilm direkt auflöst. Wird ein Fließen des Elektrolyten in der Stillstandsphase verhindert, so gelangt nicht weiteres Chlor zur Reaktion, als bereits in den einzelnen Reaktionsräumen vorliegt.

In der EP-A-149.448, die nachveröffentlicht ist, wird ein galvanisches Element beschrieben, wobei die Elektrolyträume mit einzelnen Zu- und Ableitungskanälen versehen sind. Ein Kanal kann durch ein Füllstück abgeschlossen werden, wodurch dieser Elektrodenraum von dem übrigen Zellpaket getrennt wird.

Die Leistungsfähigkeit von galvanischen Elementen wird einerseits durch die Elementpaarung und durch die Menge der eingesetzten Elemente bestimmt. Weiters richtet sich die Leistungsfähigkeit auch danach, wieviel Strom durch Kurzschlußströme und andere Nebenvorgänge verbraucht werden.

Die Einsatzfähigkeit von galvanischen Elementen ist unter anderem davon abhängig, inwieweit dieselben bei einer Lagerung über längere Zeiträume ihre Kapazität erhalten können. Die Selbstentladung von galvanischen Elementen ist auf verschiedene Ursachen zurückzuführen, wobei vagabundierende Ströme, Diffusionsvorgänge und dgl. von entscheidender Bedeutung sind.

Die vorliegende Erfindung hat sich zur Aufgabe gestellt, ein galvanisches Element zu schaffen, das einfach aufgebaut ist, und erlaubt, die Selbstentladung des galvanischen Elementes während der Lagerung zu verhindern, wobei sowohl Kurzschlußströme als auch Diffusionsvorgänge unterbunden werden.

Das erfindungsgemäße galvanische Sekundärelement, insbesondere wiederaufladbares Zink/Brom-Element, mit umlaufendem Elektrolyten, einer Vielzahl von bipolaren, kunststoffgebundenen Kohlenstoff enthaltenden Elektroden, einer Vielzahl von Separatoren, wobei gegebenenfalls die Separatoren und/oder die Elektroden zumindest im Bereich ihrer äußeren Ränder, miteinander flüssigkeitsdicht verbunden z.B. verklebt, verschweißt, oder dgl. sind, wodurch Anoden- und Kathodenräume gebildet sind, die jeweils über einzelne Verbindungsleitungen, welche jeweils über zumindest eine Sammelleitung mit einem Vorratsbehälter für den entsprechenden Elektrolyten verbunden sind, besteht darin, daß die Zu- und/oder Ableitung für den Elektrolyten die in Sammelleitungen münden aus/in den einzelnen Anoden- bzw. Kathodenraum einzeln absperr- und öffenbar, mit dem Elektrolytvorratsbehälter verbunden ist bzw. sind. Dadurch wird verhindert, daß ein elektrischer Ladungstransport während der Stillstandszeiten erfolgt, wobei gleichzeitig auch jeglicher Stofftransport während der Stillstandszeiten unterbunden ist, womit für den Entladungsvorgang lediglich jener Elektrolyt mit aktiven Elementen zur Verfügung steht, der bereits im Anoden- bzw. im Kathodenraum vorhanden ist. Vorzugsweise sind die Absperrorgane elektrisch isoliert.

Sind die Zu- und/oder Ableitungen gemeinsam im wesentlichen gleichzeitig öffen- und/oder schließbar, so ist eine besonders einfache Betätigung möglich.

Sind die Zu- und/oder Ableitungen in zeitlicher Reihenfolge öffen- und schließbar, wobei gegebenenfalls jeweils die Zu- und Ableitungen eines Anoden- und/oder Kathodenraumes gleichzeitig geöffnet, bzw. geschlossen werden, so können selbst bei Reihenschaltung der Batterie mit umlaufenden Elektrolyten Kurzschlußströme zwischen den einzelnen Zellenräumen verhindert werden, da jeweils nur ein Anoden- bzw. Kathodenraum mit der Elektrolytleitung verbunden ist, und jeweils eine entsprechende Versorgung mit dem elektrochemisch wirksamen Medium erfolgt, wobei der ... bereits von seinen elektrochemisch wirksamen Substanzen abgereicherte Elektrolyt Jeweils aus dem Kathoden- bzw. Anodenraum diskontinuierlich abgeleitet wird. Sind jeweils die Zu- und Ableitungen eines Anoden- und/oder Kathodenraumes gleichzeitig geöffnet bzw. geschlossen, so werden Druckschwankungen in diesen Räumen vermieden, sodaß das galvanische Element nur geringen Druckbeanspruchungen ausgesetzt wird. Ist das Mehrfachabsperrorgan durch eine Vielzahl von einzelnen Absperrorganen gebildet, die z.B. mechanisch oder elektrisch gemeinsam betätigbar sind, so wird dadurch eine einfache Steuerung möglich, wobei auch bei Ausfall eines Absperrorganes die Funktionstüchtigkeit der anderen Absperrorgane nicht beeinträchtigt ist.

Ein besonders einfaches und daher nur mit geringer Störungsanfälligkeit behaftetes galvanisches Element wird dann erreicht, wenn als Mehrfachabsperrorgan ein Hahn dient, der ein Kücken aufweist, in das die Zu- und/oder Ableitungen münden, welches eine, vorzugsweise zentrale, Ausnehmung aufweist, die die Zu- und/oder Ableitungen in Offenstellung miteinander verbindet, wobei der Querschnitt der Ausnehmung im Bereich der einzelnen Zu- und/oder Ableitungen in Richtung der Achse der Ausnehmung sich verkleinernd und sodann sich wieder vergrößernd ausgebildet ist.

Im folgenden wird die Erfindung anhand der Zeichnungen näher erläutert.

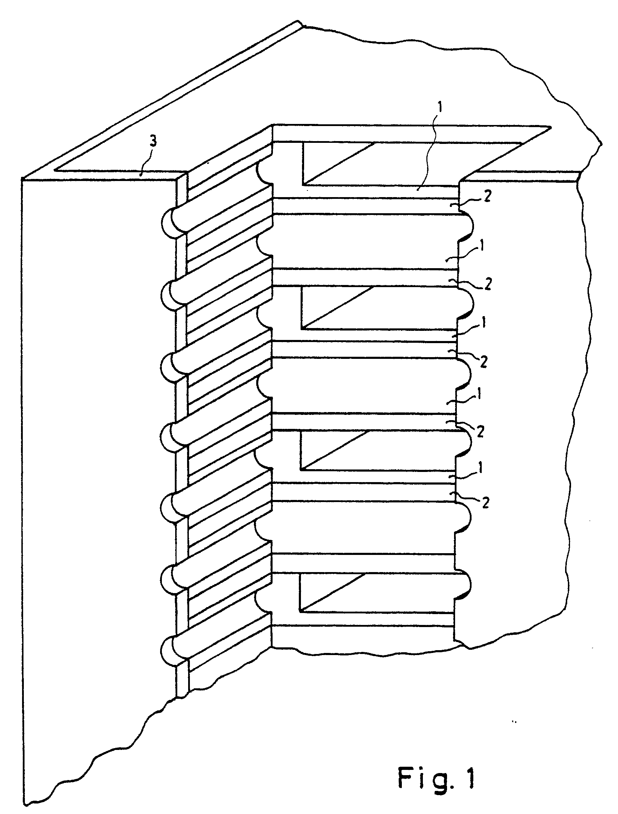

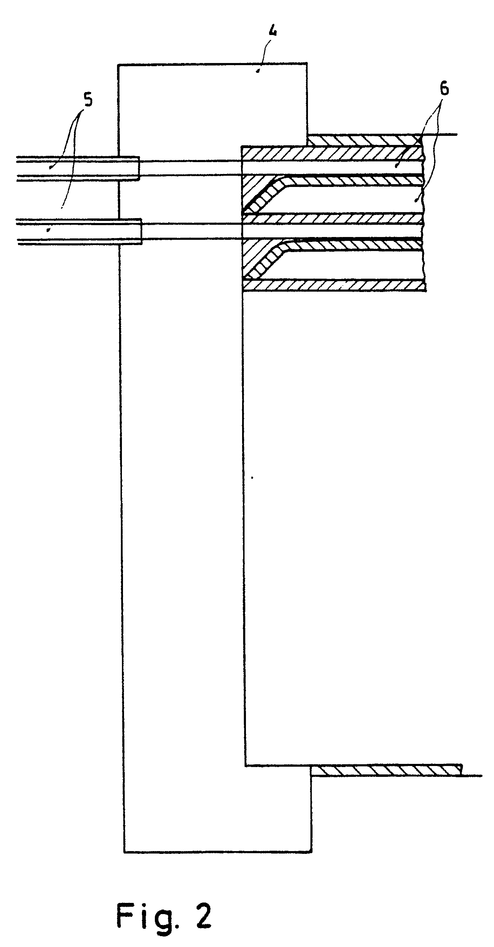

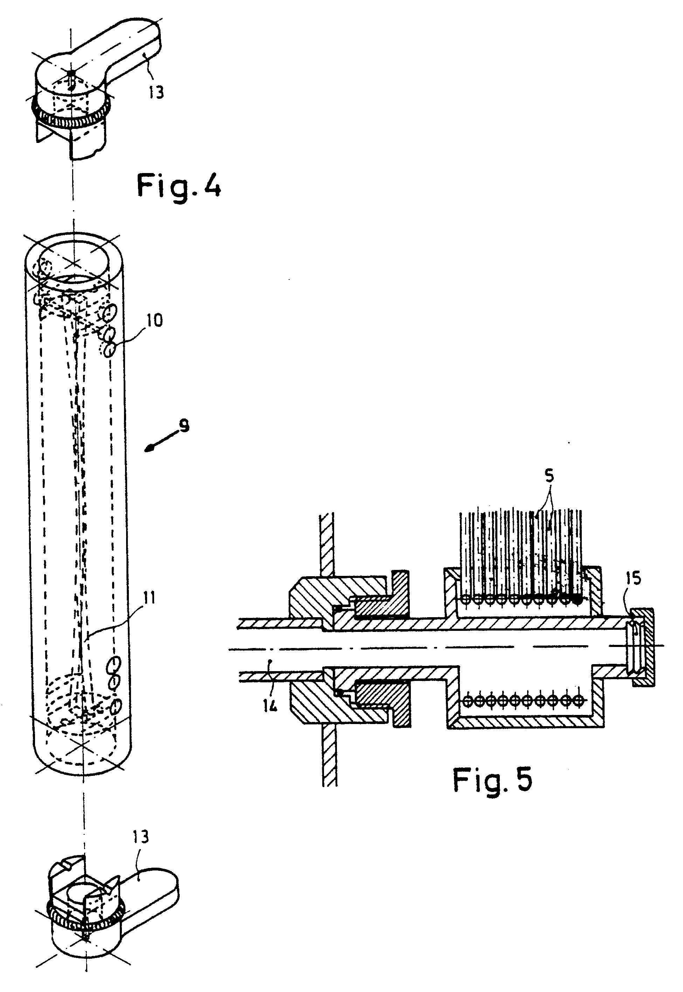

Es zeigen Fig. 1 den Ausschnitt aus einem wiederaufladbaren Zink/Brom-Element, Fig. 2 den Anschluß der einzelnen Elektrolytleitungen an das Element gemäß Fig. 1, Fig. 3 und 4 zwei verschiedene Mehrfachabsperrorgane und Fig. 5 die Einmündung der Zu- und/oder Ableitungen in eine Sammelleitung.

Das wiederaufladbare Zink/Brom-Element besteht aus einer Vielzahl aneinander angeordneten Separatoren 1 und Elektroden 2, die an ihrem Randbereich 3 miteinander flüssigkeitsdicht verbunden sind. Durch die aneinandergereihten Separatoren und Elektroden werden Anoden- und Kathodenräume gebildet, wobei dieselben durch die bipolaren Elektroden getrennt sind. Diese Elektroden sind beispielsweise aus mit Kohlenstoff gefülltem Polypropylen aufgebaut. Jeder Anoden- und Kathodenraum weist jeweils zu-mindest eine Zu- und Ableitung für den Elektrolyten auf und ist über diese Leitung mit einem Elektrolytbehälter über eine Pumpe verbunden.

Wie aus Fig. 2 ersichtlich, kann über einen Zuleitungsblock 4 die Verbindung der einzelnen Zu- bzw. Ableitungen 5 erfolgen, wobei diese Zu- und Ableitungen in den jeweiligen Anoden- bzw. Kathodenraum 6 münden. Diese Blöcke 4 dienen jeweils als Aufnahme für sämtliche Zu- bzw. Ableitungen aus dem Kathoden- bzw. Anodenraum. In Fig. 2 sind lediglich zwei Leitungen aus Übersichtsgründen dargestellt, wobei die Anzahl der Leitungen sich nach der Anzahl der Anoden- bzw. Kathodenräume richtet.

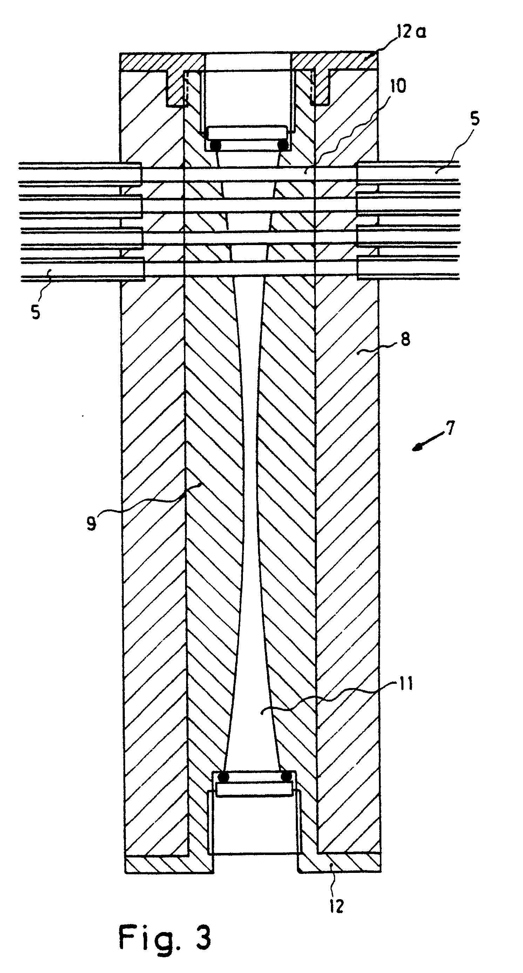

Die Leitungen 5 münden sodann in ein gemeinsames Absperrorgan 7, wie aus Fig. 3 ersichtlich, das ein Gehäuse 8 aufweist, in das die einzelnen Leitungen münden, bzw. aus welchem sie wieder austreten. Im Gehäuse 8 ist ein Kücken 9 angeordnet, das durch das Kücken quer hindurchführende Kanäle 10 aufweist, die durch Drehen des Kückens einen Flüssigkeitsdurchtritt durch die Leitungen 5 durch das Gehäuse erlauben. Bei in Geöffnetstellung, wie in Fig. 3 dargestellt, sind die einzelnen Flüssigkeitsleitungen weiters über die Ausnehmung 11 verbunden, wobei der elektrische Widerstand, der mit Elektrolyt gefüllten Ausnehmung durch sich ver kleinernden bzw. wieder vergrößernden Querschnitt geändert ist, wodurch Kurzschlußströme ungleicher Stärke ausgeglichen werden. Das Kücken weist auf einer Seite einen Fortsatz 12 auf, mit dem sich dasselbe am Gehäuse 8 abstützt, wohingegen auf der anderen Seite eine ringförmige Scheibe 12a in dasselbe geschraubt ist, wodurch das Kücken vom Herausfallen aus dem Gehäuse gesichert ist. Fig. 4 zeigt eine komplette Ansicht eines weiteren Absperrorganes mit integriertem Kurzschlußstrom-Ausgleich (shunt Strom-Ausgleich). Die Anschlüsse für die Leitungen 5 sind deutlich zu sehen, wobei die Mündungen der Kanäle 10 für die Leitungen 5 besonders deutlich ersichtlich sind. Die Ausnehmung 11 weist einen rechteckigen Querschnitt auf. Die Bedienungshebel 13 können in das Kücken eingeführt werden, sodaß ein Verschwenken des Kückens besonders leicht ermöglicht ist. Es kann jedoch auch ein Kücken ohne Ausnehmung verwendet werden.

In Fig. 5 ist eine Sammelleitung 14 dargestellt, in welche die einzelnen Zu- bzw. Ableitungen 5 münden. Am Ende der Sammelleitung 14 kann ein druckempfindlicher Schalter 15 angebracht sein, der z.B. bei Druckanstieg die Pumpen abschaltet, wodurch eine Zerstörung der Batterie, z.B. Undichtwerden, vermieden wird.

Es kann auch eine Vielzahl von einzelnen Absperrorganen, z.B. Membranventilen od. dgl., in den einzelnen Zu- bzw. Ableitungen vorgesehen werden, wobei beispielsweise elektrisch gesteuert ein gemeinsames Öffnen und Schließen möglich ist. Weiters besteht die Möglichkeit, daß die Ventile in zeitlicher Reihenfolge hintereinander geöffnet bzw. geschlossen werden, womit lediglich ein Anoden- bzw. Kathodenraum jeweils mit dem entsprechenden Elektrolytbehälter verbunden ist, sodaß durch den Elektrolyten keine Kriechströme bedingt sind.

Das Absperrorgan kann auch durch einen mit elastischem Material aufgebrachten Schlauch, gegebenenfalls mit auf weitbaren Fortsätzen, gebildet sein. Der Schlauch wird zur Betätigung mit einem Druckmedium z.B. Flüssigkeit aufgeweitet, wodurch dieser aus der Wandung der Leitung tritt und die Zu- bzw. Ableitung(en) verschlossen werden/wird. Weist der Schlauch Fortsätze auf, so können diese mit der Wandung der Leitung bündig abschließen und bei Druckbeaufschlagung sich aus dieser erstrecken und somit die Leitung verschließen.

## Ansprüche

1. Sekundärelement, insbesondere wiederaufladbares Zink/ Brom-Element, mit umlaufenden Elektrolyten, einer Vielzahl von bipolaren kunststoffgebundenen Kohlenstoff enthaltenden, Elektroden (2), einer Vielzahl von Separatoren (1), wobei gegebenenfalls die Separatoren (1) und/oder die Elektroden (2) zumindest im Bereich ihrer äußeren Ränder (3) miteinander flüssigkeitsdicht verbunden, z.B. verklebt, verschweißt oder dgl. sind, wodurch Anoden- und Kathodenräume (6) gebildet sind, die jeweils über einzelne Verbindungsleitungen (5) über jeweils über zumindest eine Sammelleitung (14) mit einem Vorratsbehälter für den entsprechenden Elektrolyten verbunden sind, dadurch gekennzeichnet, daß die Zu- und/oder Ableitungen (5) für die Elektrolyten, die in Sammelleitungen münden, aus/in die einzelnen Anoden- oder Kathodenraum (6) einzeln absperr- und öffenbar mit dem entsprechenden Elektrolytvorratsbehälter (11) verbunden ist bzw. sind.

2. Sekundärelement nach Anspruch 1, dadurch gekennzeichnet, daß elektrisch isolierte Absperrorgane vorgesehen sind.

3. Sekundärelement nach Anspruch 1 oder 2, dadurch gekennzeichnet, daß die Zu- und/oder Ableitungen (5) gemeinsam, im wesentlichen gleichzeitig, öffen- und/oder schließbar sind.

4. Sekundärelement nach Anspruch 1 oder 2, dadurch gekennzeichnet, daß die Zu- und/oder Ableitungen (5) in zeitlicher Reihenfolge öffen- und schließbar sind, wobei gegebenenfalls jeweils die Zu- und Ableitungen eines Anoden- und/oder Kathodenraumes (6) gleichzeitig geöffnet bzw. geschlossen sind.

5. Sekundärelement nach einem der Ansprüche 1 bis 4, dadurch gekennzeichnet, daß ein Mehrfachabsperrorgan bzw. eine Vielzahl von einzelnen Absperrorganen mechanisch oder elektrisch gemeinsam betätigbar sind.

6. Sekundärelement nach einem der Ansprüche 1 bis 4, dadurch gekennzeichnet, daß bei einem Mehrfachabsperrorgan (7) ein Hahn vorgesehen ist, der ein Kücken (9) aufweist, in das die Zu- und/oder Ableitungen (5) münden, welches eine, vorzugsweise zentrale, Ausnehmung (11) aufweist, das die Zu- und/oder Ableitungen in Offenstellung miteinander verbindet, wobei der Querschnitt der Ausnehmung im Bereich der einzelnen Zu- und/oder Ableitungen in Richtung der Achse der Ausnehmung sich verkleinernd und sodann sich wieder vergrößernd ausgebildet ist.

## Claims

1. A secondary element, in particular a rechargeable zinc/bromine element, having circulating electrolyte, a plurality of bipolar plastics-bonded carbon-containing electrodes (2) and a plurality of separators (1), in which if necessary the separators (1) and/or the electrodes (2) at least in the region of their outer edges are connected, e.g., glued, welded or the like together to be liquidtight, whereby anode and cathode spaces (6) are formed which in each case are connected via individual connecting leads (5) which in each case are connected via at least one collector lead (14) to a storage container for the corresponding electrolyte, characterized in that the leads (5) in and out for the electrolytes, which open into collector leads, are connected to the corresponding electrolyte storage container (11) in such a way that they may be shut off and opened individually out of/into the individual anode or cathode space (6).

2. A secondary element as in Claim 1, characterized in that electrically insulated shut-off members are provided.

3. A secondary element as in Claim 1 or 2, characterized in that the
leads (5) in and out may be opened and/or closed together, essentially simultaneously.

4. A secondary element as in Claim 1 or 2, characterized in that the
leads (5) in and out may be opened and/or closed in timed sequence, whilst if necessary in each case the leads in and out of one anode and/or cathode space (6) are opened or respectively closed simultaneously.

5. A secondary element as in one of the Claims 1 to 4, characterized
in that one multiple shut-off member or else a plurality of single shut-off members may be actuated mechanically or electrically together.

6. A secondary element as in one of the Claims 1 to 4, characterized
in that as the one multiple shut-off member (7) a cock is provided which exhibits a plug into which the leads in and out open, exhibiting a preferably central recess (11) and in the open position connecting together the leads in and out, the cross-section of the recess in the region of the individual leads in and out being made so that it diminishes in the direction of the axis of the recess and then enlarges again.

**Revendications**

1. Accumulateur, en particulier élément rechargeable zinc/brome avec électrolytes en circulation, comprenant une pluralité d'électrodes (2) bipolaires liées par matière plastique et contenant du carbone, une pluralité de séparateurs (1), les séparateurs (1) et/ou les électrodes (2) étant éventuellement reliés entre eux de manière étanche aux liquides au moins dans la zone de leurs bords extérieurs (3), par exemple par collage, soudure ou autre, des espaces anodiques et cathodiques (6) étant ainsi formés, lesdits espaces étant reliés par des conduites de raccordement séparées (5) reliées chacune par au moins une conduite collectrice (14) à un réservoir de stockage pour les électrolytes correspondants, caractérisé en ce que les conduites d'amenée et/ou d'évacuation (5) pour les électrolytes qui débouchent dans les conduites collectrices sont reliées au réservoir de stockage d'électrolyte (11) correspondant de manière à pouvoir être bloquées ou ouvertes séparément par rapport aux différents espaces anodiques ou cathodiques (6).

2. Accumulateur selon la revendication 1, caractérisé en ce que des organes de blocage isolés électriquement sont prévus.

3. Accumulateur selon la revendication 1 ou 2, caractérisé en ce que les conduites d'amenée et/ou d'évacua-tion (5) peuvent être ouvertes et/ou fermées ensemble, essentiellement simultanément.

4. Accumulateur selon la revendication 1 ou 2, caractérisé en ce que les conduites d'amenée et/ou d'évacuation (5) peuvent être ouvertes et fermées successivement, les conduites d'amenée et d'évacuation d'un espace anodique et/ou cathodique (6) étant éventuellement ouvertes et fermées simultanément.

5. Accumulateur selon l'une des revendications 1 à 4, caractérisé en ce qu'un organe de blocage multiple ou une pluralité d'organes de blocage individuels peuvent être actionnés ensemble mécaniquement ou électriquement.

6. Accumulateur selon l'une des revendications 1 à 4, caractérisé en ce que dans un organe de blocage multiple (7), il est prévu un robinet muni d'une noix (9) dans laquelle débouchent les conduites d'amenée et/ou d'évacuation (5) et qui présente un évidement (11) de préférence central qui relie entre elles les conduites d'amenée et/ou d'évacuation en position d'ouverture, la section transversale de l'évidement diminuant dans la zone des différentes conduites d'amenée et/ou d'évacuation en direction de l'axe de l'évidement puis augmentant de nouveau.

Fig. 1

Fig. 2

Fig. 3

Fig. 4

10

9

11

13

13

5

15

14

Fig. 5